# EUROPEAN PATENT SPECIFICATION

(11) **EP 0 664 235 B1**
(45) Date of publication and mention of the grant of the patent: **19.11.1997**
(21) Application number: 95300234.2
(22) Date of filing: 13.01.1995
(51) Int. Cl.: B60J 5/04, B60J 10/06

(54) **Window frame for a motor vehicle**
Fensterrahmen für Kraftfahrzeug
Cadre de fenêtre pour véhicule automobile

(30) Priority: 19.01.1994 GB 9400924
(43) Date of publication of application: 26.07.1995
(73) Proprietor: Standard Products Limited, Huntingdon Cambridgeshire PE18 6DD (GB)
(72) Inventor: Keys, James Frederick, Saint Neots Cambridgeshire, PE19 3AB (GB)
(74) Representative: Jones, Michael Raymond

(56) References cited:
- EP-A- 0 490 733
- DE-B- 1 242 105
- GB-A- 500 534

## Description

This invention relates to a vehicle window frame in which the structural member of the frame is formed by stretch bending a single length of rolled metal.

The structural part of the window frame of an automobile door is generally formed by one of three basic methods. In a first, widely used, method, the frame is formed of, usually, two stamped parts which are joined together by welding. In a second method, a sheet of metal (usually steel) is rolled to form a desired tubular cross-section. This rolled section is then cut to the required length and bent, usually stretch bent, to the desired shape. With modern car design, this method is somewhat less preferred than the stamping method because it requires that the window frame must have a constant cross-section. By contrast, the stamping method enables the window frame to have a variable cross-section. Moreover, when the junction between the so-called "B" post and the top rail of the door frame is to be square, the rolled channel section must be cut and then mitred together; this problem does not arise when the window frame is stamped.

In a third method of forming the structural member of a window frame for a motor vehicle, the member is extruded from a metal such as aluminium and then bent to the desired shape; this method is less common in the art than the first two mentioned above.

It would be desirable to take advantage of the inherent strength of a rolled channel member in association with other desirable features of window frame technology.

In EP-A-0490733, there is disclosed a sealing device for the frame of a bay provided in a door panel, with the bay having a rabbet and being adapted to be closed by a window. The sealing device has a first part for fastening on the rabbet having sealing lips designed to contact the window, and a second part connected to the first part by a third part which is sufficiently resilient and compliant to enable relative movement of the first and second parts, and to enable the attachment by a locking action of the second part to an anchoring edge of the door panel.

In accordance with the present invention, there is provided a motor vehicle comprising a body with a door mounted in a door opening of the body, the door being provided with a window frame which defines a window opening in which a pane of glazing material is movable, the window frame comprising:
(i) a structural member defining the window opening of the door; and
(ii) a single length of a glass run channel component secured to the structural member, said glass run channel including a rigid outer wall element defining an outer boundary of the window frame whereby the pane of glazing material is held substantially flush with the outer surface of adjacent regions of the vehicle body (Motor vehicle of the type disclosed in EP-A-0 490 733);
   characterised in that the structural member is composed of a single length of constant cross-section rolled metal having a rounded junction between the top rail of the frame and the "B" pillar as formed by stretch bending the length of rolled metal.

For the first time, the present invention provides a flush glazing system for a motor vehicle in which there are no moulded or mitred corners in the window frame. Thus, the invention provides a window frame in which the structural member is formed of a single length of rolled metal, and in which the pane of glazing material is substantially flush with the outer surface of the adjacent regions of the vehicle body. Previously, such arrangements have been exclusive to window frames formed by the stamping method as described above.

The present invention represents a trend away from conventional window frame design where the junction between the top rail and the "B" post is square, as formed, for example, by a moulding and/or mitring technique. The present invention brings with it particular economic advantages, such as the reduced equipment required to manufacture the window frame.

The window frame of the invention also has the advantage that both the structural member and the glass run channel can each have a separate neutral axis. Previous arrangements have required all elements of the frame to bend about the same axis, which can lead to significant distortions in the final component.

The structural member of the door frame is composed of a single length of constant cross-section rolled metal. The technique of "rolling" to produce a structural member is well known in the art, and enables a member of complex cross-section to be formed. In the process, a strip of metal is progressively rolled by a series of rollers into the desired cross-section. Opposite sides of the strip are then joined together, for example in a welding operation to form the rolled channel. It is normal that this rolled channel is formed in a continuous process. For the purposes of the invention, a length of this rolled channel is taken and bent to the desired shape to define the window opening of the vehicle door. As stated above, the junction between the top rail of the frame and the "B" pillar is rounded, as formed by stretch bending the length of rolled metal.

Separate from the structural member, a single length of a glass run channel component is fabricated, for example by an extrusion technique. At least one of the walls of the glass run channel is made rigid as it is to form an outer boundary of the window frame. Preferably, the whole of the glass run channel part will be provided with a rigid, shape sustaining core.

The specific shape of the glass run channel is to be determined by the skilled person. For instance, the glass run channel may be provided with a second channel shaped region, which is inversely disposed in relation to the glass run channel, to receive a flange or pinch weld of the structural member. Alternatively, other means may be provided whereby the glass run channel is secured to the structural member.

The glass run channel is bent into the desired shape and is then secured to the structural member to form the window frame.

In addition, a margin seal, which is a type of seal known per se in the industry and which is composed of a support element and a sealing lip, may be provided on the glass run channel such that the sealing lip extends away from the glass run channel in the plane of the surface of the body of the vehicle. The margin seal may be a separate element from the glass run channel and fastened thereto by a suitable fastening means. Alternatively, the margin seal may be provided as an integral part of the glass run channel, for example by being formed with the glass run channel in an extrusion operation.

According to another aspect of the invention, there is provided the window frame employed in the motor vehicle of the first aspect of this invention.

For a better understanding of the present invention, and to show how the same may be carried into effect, reference will now be made, by way of example, to the accompanying drawings in which:
Figure 1 is a side view of a motor vehicle in accordance with the present invention; and
Figure 2 is a cross-section through a combined window frame and glass run channel of the invention.

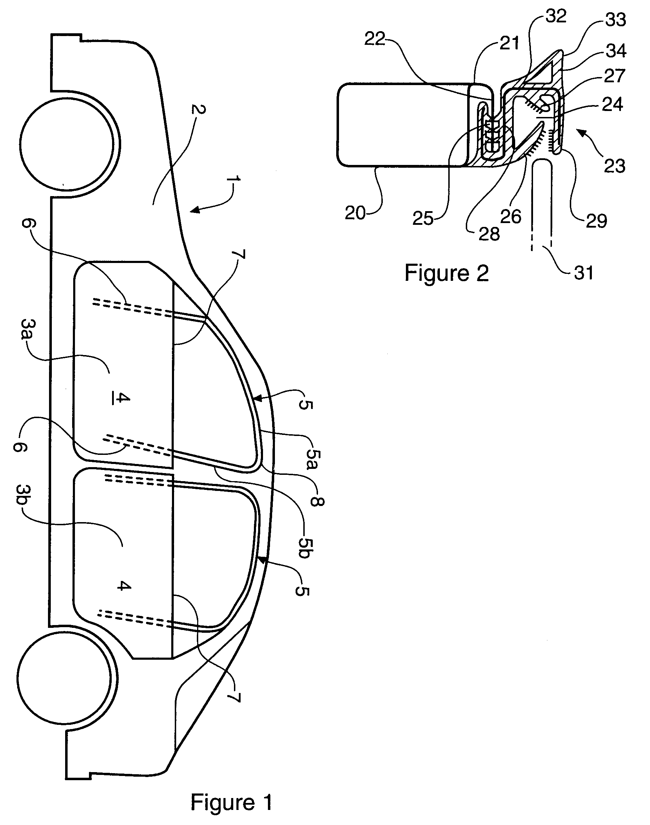

In figure 1, motor vehicle 1 has a body 2 and front door 3a and rear door 3b. Each of the doors 3a and 3b has a lower part 4 and an upper window frame 5 the ends 6 of which extend below the so-called waist line 7 where they are secured to the inside of the door (not shown). The structural element of the frame 5 is formed by stretch bending a rolled channel member. As a consequence, the junction 8 of the frame between the "B" post 5b and the top rail 5a is rounded, and not square.

In figure 2, the combined window frame and glass run channel of the invention is shown. This comprises a tubular structural member 20 which is formed by rolling a metal sheet to the desired cross-section. The ends are joined in a pinch weld 21 which extends to form a flange 22. Secured to the flange 22 is a sealing strip 23 formed of an elastomeric material such as a rubber or a plastics material which, in the embodiment shown, comprises two inversely disposed channels 24 and 25. Channel 24 is a glass run channel provided with lips 26 and 27. Channel 25, which is inversely disposed with respect to channel 24 is capable of fitting over and gripping the flange 22 of the structural member, by virtue of ribs, as known in the art. Channels 24 and 25 share a common wall 28. The outer wall 29 of the glass run channel retains window 31. This outer wall 29, as well as the remainder of the sealing strip 23, include a rigid, shape sustaining core 32, preferably made of a metal. Integral with the sealing strip 23 is a margin seal 33 which includes a lip 34 extending away from the outer wall 29.

## Claims

1. A motor vehicle (1) comprising a body (2) with a door (3a) mounted in a door opening of the body, the door being provided with a window frame (5) which defines a window opening in which a pane (31) of glazing material is movable, the window frame (5) comprising:
(i) a structural member (20) defining the window opening of the door; and
(ii) a single length of a glass run channel component (23) secured to the structural member (20), said glass run channel including a rigid outer wall element (29) defining an outer boundary of the window frame whereby the pane of glazing material is held substantially flush with the outer surface of adjacent regions of the vehicle body;
characterised in that the structural member (20) is composed of a single length of constant cross-section rolled metal having a rounded junction (8) between the top rail (5a) of the frame and the "B" pillar (5b) as formed by stretch bending the length of rolled metal.

2. A motor vehicle according to claim 1, wherein the structural member (20) and the glass run channel (23) each have a separate neutral axis.

3. A motor vehicle according to claim 1 or 2, wherein the glass run channel component (23) is provided with a second channel (25) shaped region, which is inversely disposed in relation to the glass run channel (24), to receive a flange (22) or pinch weld of the structural member (20).

4. A motor vehicle according to claim 1, 2 or 3, which also includes a margin seal (33) comprising a support element and a sealing lip (34), the margin seal preferably being provided on the glass run channel (23) such that the sealing lip extends away from the glass run channel in the plane of the surface of the body of the vehicle.

5. A motor vehicle according to claim 4, wherein the margin seal (33) is an integral part of the glass run channel component.

6. A motor vehicle according to any preceding claim, wherein, in the glass run channel component, the whole of the glass run channel part is provided with a rigid, shape-sustaining core (32).

7. A motor vehicle according to any preceding claim, wherein the structural member (20) is composed of a single length of constant cross-section metal which has been "rolled" to produce a member of complex cross-section, with opposite sides being joined to form a closed channel if desired, followed by bending to form the rounded junction.

8. A motor vehicle according to any preceding claim, wherein the glass run channel component (23) is formed by extrusion.

9. For use in a motor vehicle as claimed in any preceding claim, a window frame as defined in any preceding claim.

## Patentansprüche

1. Kraftfahrzeug (1), umfassend eine Karosserie (2) mit einer in einer Türöffnung der Karosserie befestigten Tür (3a), die mit einem Fensterrahmen (5) versehen ist, der eine Fensteröffnung definiert, in der sich eine Fensterscheibe (31) bewegen lässt, wobei der Fensterrahmen (5) umfasst:
(i) ein Strukturelement (20), das die Fensteröffnung der Tür definiert; und
(ii) eine Glasführungsrillenkomponente (23) aus einem einzelnen Stück, befestigt an dem Strukturelement (20), wobei die Glasführungsrille ein festes Außenwandelement (29) enthält, das eine äußere Grenze des Fensterrahmens definiert, durch den die Fensterscheibe mit der Außenfläche der benachbarten Bereiche der Fahrzeugkarosserie im wesentlichen bündig gehalten wird,
dadurch gekennzeichnet, dass
das Strukturelement (20) aus einem einzelnen Walzmetallstück mit konstantem Querschnitt besteht und eine abgerundete Verbindung (8) zwischen der oberen Schiene (5a) des Rahmens und der durch Reckbiegen eines einzelnen Walzmetallstücks gebildeten "B"-Stütze (5b) hat.

2. Kraftfahrzeug nach Anspruch 1, bei dem das Strukturelement (20) und die Glasführungsrille (23) jeweils eine gesonderte Biegeachse haben.

3. Kraftfahrzeug nach Anspruch 1 oder 2, bei dem die Glasführungsrillenkomponente (23) mit einem zweiten rillenförmigen Bereich (25) versehen ist, der umgekehrt zur Glasführungsrille (24) angeordnet ist und mit einem Flansch (22) oder einer Punktschweißung an dem Strukturelement (20) befestigt ist.

4. Kraftfahrzeug nach Anspruch 1, 2 oder 3, das auch eine Randdichtung (33) enthält, umfassend ein Stützelement und eine Dichtungslippe (34), wobei die Randdichtung bevorzugt so auf der Glasführungsrille (23) angeordnet ist, dass die Dichtungslippe von der Glasführungsrille in der Oberflächenebene der Fahrzeugkarosserie wegzeigt.

5. Kraftfahrzeug nach Anspruch 4, bei dem die Randdichtung (33) ein integrierter Bestandteil der Glasführungsrillenkomponente ist.

6. Kraftfahrzeug nach einem vorhergehenden Anspruch, bei dem in der Glasführungsrillenkomponente der gesamte Glasführungsrilleabschnitt mit einem festen, formstützenden Kern (32) ausgestattet ist.

7. Kraftfahrzeug nach einem vorhergehenden Anspruch, bei dem das Strukturelement (20) aus einem einzelnen Metallstück mit konstantem Querschnitt besteht, das zur Herstellung eines Elementes mit komplexem Querschnitt gewalzt wird, wobei die gegenüberstehenden Seiten - wenn gewünscht - miteinander verbunden werden, so dass ein geschlossener Kanal entsteht, und anschließend gebogen wird, damit die abgerundete Verbindung hergestellt wird.

8. Kraftfahrzeug nach einem vorhergehenden Anspruch, bei dem die Glasführungsrillenkomponente (23) durch Extrusion hergestellt wird.

9. Fensterrahmen nach einem vorhergehenden Anspruch zur Verwendung in einem Kraftfahrzeug nach einem vorhergehenden Anspruch.

## Revendications

1. Véhicule à moteur (1) comportant une carrosserie (2) avec une porte (3a) montée dans une ouverture de porte de la carrosserie, la porte étant pourvue d'un cadre de fenêtre (5) qui définit une ouverture de fenêtre dans laquelle un panneau (31) de matière vitrée est mobile, le cadre de fenêtre (5) comportant :
(i) un élément structurel (20) définissant l'ouverture de fenêtre de la porte; et
(ii) une unique longueur d'un composant de profilé de coulissement de vitre (23) fixé sur l'élément structurel (20), ledit profilé de coulissement de vitre comprenant un élément de paroi extérieure rigide (29) définissant une limite extérieure du cadre de fenêtre de sorte que le panneau de matière vitrée est maintenu sensiblement en affleurement avec la surface extérieure de zones adjacentes de la carrosserie de véhicule;
caractérisé en ce que l'élément structurel (20) se compose d'une unique longueur de métal roulé de section constante ayant une jonction arrondie (8) entre le rail supérieur (5a) du cadre et le montant central (5b) formé par cintrage et étirement de la longueur de métal roulé.

2. Véhicule à moteur selon la revendication 1, dans lequel l'élément structurel (20) et le profilé de coulissement de vitre (23) ont chacun un axe neutre séparé.

3. Véhicule à moteur selon la revendication 1 ou 2, dans lequel le composant de profilé de coulissement de vitre (23) est pourvu d'une zone profilée de deuxième canal (25), qui est disposée de manière inversée par rapport au profilé de coulissement de vitre (24) afin de recevoir un rebord (22) ou une soudure par pincement de l'élément structurel (20).

4. Véhicule à moteur selon la revendication 1, 2 ou 3, qui comprend également un joint périphérique (33) comportant un élément de support et une lèvre d'étanchéité (34), le joint périphérique étant de préférence prévu sur le profilé de coulissement de vitre (23) de telle sorte que la lèvre d'étanchéité s'étend à l'écart du profilé de coulissement de vitre dans le plan de la surface de la carrosserie du véhicule.

5. Véhicule à moteur selon la revendication 4, dans lequel le joint périphérique (33) fait partie intégrante du composant de profilé de coulissement de vitre.

6. Véhicule à moteur selon l'une quelconque des revendications précédentes, dans lequel, dans le composant de profilé de coulissement de vitre, la totalité de la partie de profilé de coulissement de vitre est pourvue d'un noyau de maintien de forme rigide (32).

7. Véhicule à moteur selon l'une quelconque des revendications précédentes, dans lequel l'élément structurel (20) se compose d'une unique longueur de métal de section constante qui a été 〈〈 roulée 〉〉 afin de produire un élément de section complexe, avec des côtés opposés qui sont reliés afin de former un profilé fermé si cela est souhaité, suivi d'un cintrage afin de former la jonction arrondie.

8. Véhicule à moteur selon l'une quelconque des revendications précédentes, dans lequel le composant de profilé de coulissement de vitre (23) est formé par extrusion.

9. Pour utilisation dans un véhicule à moteur selon l'une quelconque des revendications précédentes, cadre de fenêtre selon l'une quelconque des revendications précédentes.
